# EUROPEAN PATENT APPLICATION

(11) **EP 2 468 472 A1**
(43) Date of publication of application: **27.06.2012**
(21) Application number: 10460054.9
(22) Date of filing: 23.12.2010
(51) Int. Cl.: B29C 45/14, B29C 65/50

(54) **A component made from the materials of two thermoplastics and the method of its production**

(71) Applicant: ABB Research Ltd., 8050 Zürich (CH)
(72) Inventor: Czyzewski, Jan, 30-223 Krakow (PL); Michalik, Adam, 32-087 Bibice (PL)
(74) Representative: Chochorowska-Winiarska, Krystyna

(57) **Abstract**

The invention relates to a component made of the materials of two thermoplastics, to its production method and to a constituent part of the insulating system of a low, medium or high voltage electric apparatus containing the component according to the invention.

The component comprises a substrate (A) of the material of one thermoplastic and a surface layer (B) made of the material of the second thermoplastic, which are bonded to each other through a specific intermediate layer (C) formed from the material of the thermoplastic of the substrate (A) and from the material of the thermoplastic of the surface layer (B), forming a component of enhanced mechanical resistance for broad range of applications, especially in demanding operating conditions in high electric fields. The surface layer (B) is preferably applied on the outer layer (A1), specifically formed on the substrate (A), in the thermoplastic injection molding process.

## Description

The invention relates to a component made from the materials of two thermoplastics and the method of its production, especially for use in applications in high electric fields, for example as a constituent part of the insulating system of a low, medium or high voltage apparatus.

There are known components made from the materials of two thermoplastics, comprising a substrate of the material of one thermoplastic and a surface layer of the material of another thermoplastic.

There are also known methods for the production of such components, which consist in joining a substrate of the material of one thermoplastic with a surface layer of the material of another thermoplastic.

Thermoplastics are broadly used for manufacturing various kinds of devices or its parts. In order to achieve the desired functionality of the device or its parts, it is often necessary to use several thermoplastics having different properties. This is most often achieved by joining thermoplastics having the desired properties to form one component whose properties then result from the properties of the constituent thermoplastics. Such a component consisting of two different thermoplastics can be obtained using one of the known methods of joining thermoplastics, such as gluing, ultrasonic welding, screwing together, riveting, laminating and overmolding.

An example of the use of a component made from constituent thermoplastics with different properties, in which an electrically insulating thermoplastic is joined with an electrically conductive thermoplastic, is a constituent part of the insulating system of an electric apparatus, in particular of a low, medium or high voltage apparatus. In such a part, the electrically conductive thermoplastic can be used to shape the electric field, while the adjoining electrically insulating thermoplastic is the insulating layer of that part. During operation of such a constituent part under voltage, high electric field occurs within the volume of the electrically insulating thermoplastic and also in the area of contact of both thermoplastics. In this case, the quality of the obtained connection between the joined thermoplastics is of key importance. Lack of adhesion or too weak adhesion between the electrically insulating thermoplastic and the electrically conductive one, in particular when the constituent part of the insulating system is subjected to mechanical load, may result in voids being formed at the point of contact of the two thermoplastics. The occurrence of such voids adversely affects the functioning of the constituent part of the insulating system due to the occurrence of various adverse phenomena, for instance, partial discharges in the void spaces, and consequently it may result in the premature degradation of the thermoplastics of the constituent parts of the insulating system and in the destruction of the part as the final result. Such adverse phenomena may occur in an electric field whose component perpendicular to the plane of contact of the two thermoplastics exceeds the value of 0.5kV/mm inside one of the thermoplastics.

Other adverse phenomena may occur also in the area of contact of two electrically insulating thermoplastics. If the adhesion between the thermoplastics is insufficient, then, usually as a result of moisture penetration into the area of contact of the thermoplastic materials, electric currents flowing across the contact surface can occur, which lead to degradation of the properties of the materials. Such currents can occur in the presence of electric fields with its component tangent to the surface of contact of the materials larger than 0.01kV/mm.

Another example of a component composed of thermoplastics of different physical or chemical properties is a component of a device operating in chemically aggressive environment. Such a component can consist of two thermoplastics of which one provides mechanical rigidity and the other forms the surface layer and ensures resistance to chemical agents occurring in the environment.

There is a known method of production of a component from thermoplastics, in which one thermoplastic material in solidified state is overmolded with another thermoplastic material in liquid state and cooled down to solidification. However, the adhesion between the two thermoplastics is often not satisfactory. In particular, this is the case if the joined thermoplastics are not chemically similar. In a component manufactured by that method, the adhesion between the thermoplastics is usually maintained by thermal shrinkage of the injected thermoplastic material taking place during its cooling down. However, the effect of the shrinkage has a tendency to decline, which in a longer period of time leads to the creation of undesirable voids in the area of contact of the two thermoplastics.

One of the causes of the lack of adhesion between thermoplastics combined to form a component by overmolding one thermoplastic material onto another thermoplastic material is the formation of a frozen layer at in the area of contact of the thermoplastics. The frozen layer is formed as a result of rapid cooling of the injected liquid thermoplastic material when it touches the surface of the overmolded material. In consequence of the decrease of the temperature of the liquid thermoplastic its viscosity rapidly increases and it solidifies, which reduces the ability to form a permanent connection, especially a cohesive bond, between the injected thermoplastic and the overmolded one.

Moreover, the prematurely solidified thermoplastic is not able to flow into hollows, pores or voids occurring on the surface of the overmolded thermoplastic and therefore a formation of a shape connection between the two thermoplastics is not possible either.

In known components, lack of adhesion between the materials of two thermoplastics results in a very small mechanical resistance of these components to tensile forces acting on the constituent parts made of the two thermoplastics.

The European patent description EP 1 567 335 discloses a coextruded, biaxially oriented foil structure comprising at least a substrate made of a thermoplastic polymer and a surface layer of a low melting point thermoplastic polymer. The foil is manufactured by coextrusion of the melted thermoplastic materials of each individual layer of the foil structure by means of an extrusion die. In the next operation a simultaneous biaxial orientation is performed by stretching the coextruded foil sheet by means of linear induction motors which drive directly and synchroniously the pairs of the stretcher frame clamps. Such foil of two thermoplastics can be made only if one of the thermoplastics has low melting temperature not exceeding 110°C, which greatly restricts the use of the foil. In particular, use of such foil is excluded for the constituent parts of the insulating system of an electric apparatus in which large amounts of heat are produced and where their temperature can momentarily rise significantly above the above mentioned low melting point of one of the thermoplastics. Moreover, the nature of the foil greatly limits the area of its application, because its shape is limited to a flat, thin sheet.

The goal of the invention is the development of a component of substantially any shape, made from the materials of two thermoplastics and having a structure that ensures very good adhesion between the materials of the thermoplastics and consequently a component having a reliable structure with increased mechanical resistance, including mechanical resistance to tearing forces or tensile forces acting on the constituent parts of the component.

Another goal of the invention is the development of a component and the method of its production which would provide a product with elements made of thermoplastics, permanently joined with each other, and without using additional joining substances between the elements made of thermoplastic.

One more goal of the invention is the development of a component which when used in an electric apparatus would ensure its efficient and trouble free operation in high electric fields, i.e. fields with its component perpendicular to the surface of contact of the parts made of thermoplastics of a value larger than 0.5kV/mm or with its component tangent to that surface of a value larger than 0.01kv/mm, for example, the development of a component applicable as a constituent of the insulating system of a low, medium or high voltage electric apparatus.

A further goal of the invention is the development of a simplified and inexpensive method of manufacture of a component, which would make it possible to produce a component of enhanced mechanical resistance, in two operations, i.e. in the first operation the production of a substrate with an outer layer of a structure having a developed surface, including a discontinuous structure, from the material of one thermoplastic, and, in the second operation, its integration with a surface layer made from the material of another thermoplastic through an intermediate layer made from the material of the thermoplastic of the substrate and from the material of the thermoplastic of the surface layer.

The goal of the invention is also the reduction of the costs of execution of the method of manufacturing of the component.

An important goal of the invention is the development of a component made from the materials of two thermoplastics having the same or different physical and chemical properties, and the method of production of such a component, which would provide a product applicable in a plurality of various applications, i.e. working well in various demanding operating conditions, especially in elevated temperatures.

The component made of the materials of two thermoplastics, according to the invention, comprises a substrate made of the material of one thermoplastic and a surface layer made of the material of a second thermoplastic, and characterized by the fact that the substrate is joined with the surface layer through an intermediate layer formed from the material of the thermoplastic of the substrate and from the material of the thermoplastic of the surface layer, forming a component with enhanced mechanical resistance, the intermediate layer containing a mixture of the material of the thermoplastic of the substrate and the material of the thermoplastic of the surface layer.

Preferably, the intermediate layer is formed from the material of the thermoplastic of the outer layer of the substrate, the outer layer having a structure with developed surface.

Preferably, the outer layer of the substrate is a microstructure with the proportion of its surface area to the area of the projection of that surface larger than 1.25, the depth of the depressions not exceeding 50 µm, and the proportion of the depth of the depressions to their width being at least 0.1.

Preferably, the outer layer of the substrate is a porous microstructure.

Preferably, the substrate and the surface layer are made of the material of the same thermoplastic.

Preferably, the material of the thermoplastic of the substrate and the material of the thermoplastic of the surface layer are materials based on thermoplastic polymers of the polyester group, preferably polyethylene terephthalate (PET), polybutylene terephthalate (PBT), polycarbonates (PC), polyphenylene sulfide (PPS), polyamides and copolyamides, also semi-aromatic ones, preferably PA66, PA6, PA6/66, polyphthalamides PPA, preferably PA 6T/66 or PA 6T/6I, or based on mixtures containing the above mentioned polymers, or are materials based on the above mentioned polymers and containing reinforcing agents or fillers, preferably in the form of grains or fibers of an electrically insulating material, or an electrically conductive material, preferably in the form of carbon black, carbon or metallic fibers, metallic or semiconductive grains.

A constituent part of the insulating system of a low, medium or high voltage electric apparatus, according to the invention, comprises a component made of the materials of two thermoplastics according to the invention.

The method of production of the component made of the materials of two thermoplastics, according to the invention, consists in bonding together a substrate made of the material of one thermoplastic and a surface layer made of the material of another thermoplastic, and it is characterized by the fact that the substrate is bonded to the surface layer through an intermediate layer which is formed from the material of the thermoplastic of the substrate and from the material of the thermoplastic of the surface layer, forming a component with enhanced mechanical resistance, the intermediate layer being formed as a mixture of the material of the thermoplastic of the substrate and the material of the thermoplastic of the surface layer.

Preferably, the intermediate layer is formed from the material of the thermoplastic of the outer layer of the substrate, the outer layer having been formed earlier on the surface of the substrate as a structure with developed surface.

Preferably, the outer layer of the substrate is formed as a microstructure with the proportion of its surface area to the area of the projection of that surface larger than 1.25, the depth of the depressions not exceeding 50 µm, and the proportion of the depth of the depressions to their width being at least 0.1.

Preferably, the outer layer is formed in the substrate using a mask with the negative of the structure with developed surface, the mask being brought to contact with the surface of the substrate and pressure being applied to it.

Preferably, before the mask is brought to contact with the surface of the substrate, it is covered with a solvent able to dissolve the thermoplastic material of the substrate.

Preferably, the outer layer is formed on the surface of the substrate by etching.

Preferably, the outer layer is formed on the surface of the substrate by the polymer phase separation method also called the method of self-organization of polymer domains.

Preferably, the outer layer is formed on the surface of the substrate during the formation of the substrate, preferably in the injection molding process.

Preferably, the intermediate layer is formed by overmolding the substrate by the material of the thermoplastic of the surface layer, during the formation of the surface layer, which is cooled down, thus, together with the substrate, forming the component.

Preferably, before or during the formation of the intermediate layer the substrate is heated, preferably to a temperature from the range of 100°C - 300°C, and more preferably to a temperature from the range of 145°C-170°C.

The advantage of the component made of the materials of two thermoplastics, according to the invention, is that its structure has an excellent mechanical resistance, including mechanical resistance to tearing or tension of the constituent parts of the component. Owing to this, when the constituent parts are subjected to mechanical loads - either directly or through thermal expansion during thermal loads - no delamination occurs in the component according to the present invention and no voids are formed between the constituent parts of the component, and therefore there is no reduction in efficiency or loss of the operating capability of the component in high electric fields.

Another advantage of the invention is that the structure of the component does not contain any materials additionally introduced into the component except the materials of the thermoplastics of the substrate and of the surface layer. Owing to this, the component, according to the invention, works very well in high electric fields, for instance, used as a constituent part of the insulating system of a low, medium or high voltage electric apparatus.

One more advantage of the invention is that it provides a simplified and inexpensive method for production of a component of enhanced mechanical resistance, which makes possible the production of the component in two operations, i.e. the production of a substrate with an outer layer being a structure with developed surface, including a discontinuous structure, from the material of one thermoplastic in the first operation, and integration with the surface layer of the material of the second thermoplastic through an intermediate layer made of the material of the thermoplastic of the substrate and of the material of the thermoplastic of the surface layer in the second operation.

Still another advantage of the invention is that it provides a component made of the materials of two thermoplastics, with the same or different physical and chemical properties, in which, depending on the needs, suitable thermoplastics can be used creating a product for a plurality of various specific applications.

The subject of the invention in preferable embodiments is presented in the drawing, where fig. 1 shows schematically the component made of the materials of two thermoplastics, according to the invention, fig. 2 - shows schematically the operation of overmolding of the outer layer A1 of the substrate A with the material of the thermoplastic of the surface layer B according to the method of production of the component, according to the invention, fig. 3 - shows schematically the substrate A with the outer layer A1 formed as a structure with developed surface and this substrate A partially overmolded with the thermoplastic of the surface layer B, in the process of forming a separate intermediate layer C, and fig. 4 - shows in cross-section an example of application of the component according to the invention in a constituent part of the insulating system of a low, medium or high voltage electric apparatus.

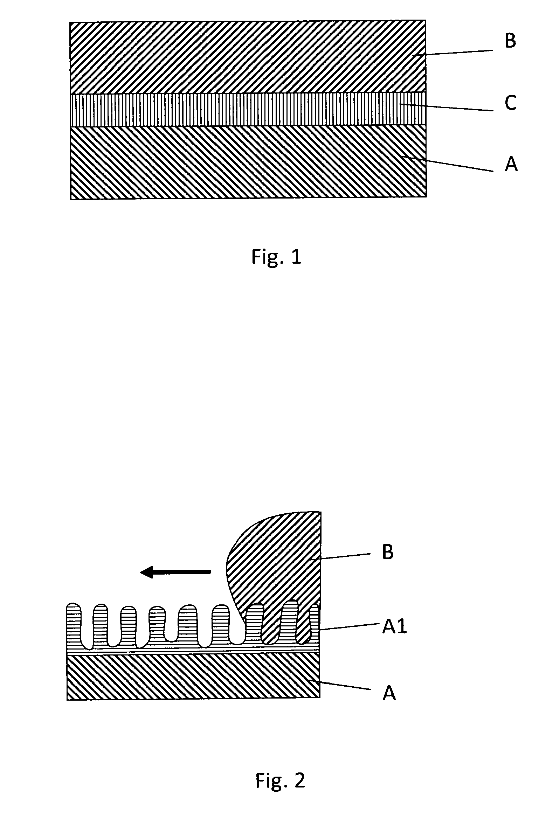

Fig. 1 shows schematically the component made of the materials of two thermoplastics, according to the invention. The structure of the finished component consists of constituent parts, namely, the substrate A, the surface layer B and the intermediate layer C, made of the materials of two thermoplastics. The intermediate layer C is situated between the substrate A and the surface layer B and it permanently joins the substrate A with the surface layer B. The intermediate layer C contains the materials of the two thermoplastics of the substrate A and of the surface layer B mixed and melted with each other, which ensures an unexpectedly high mechanical resistance of the finished component, see Table 1.

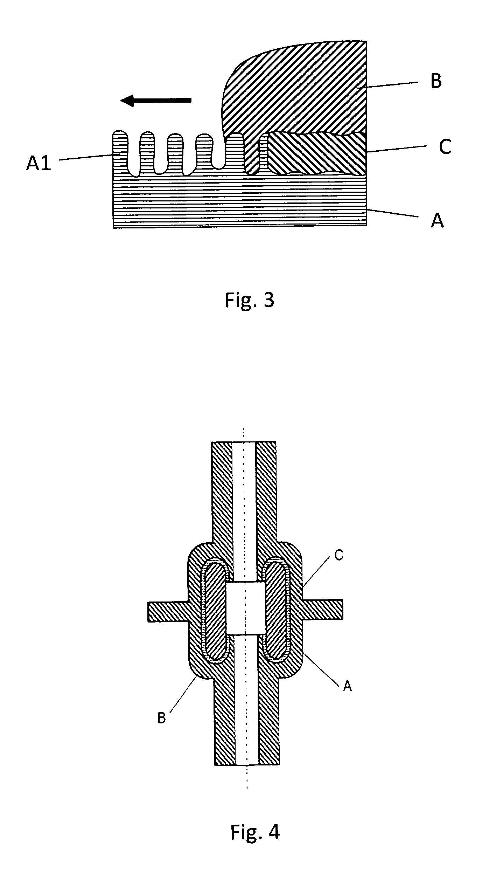

The intermediate layer C can be formed from the material of the thermoplastic of the outer layer A1 of the substrate A, which outer layer A1 has been given earlier a developed surface structure, or which is straightaway formed with a developed surface structure, as shown in fig. 3. The outer layer A1 can also be a microstructure with the proportion of its surface area AP to the area of the projection of that surface larger than 1.25. The depth of the depressions in the microstructure, preferably, does not exceed 50 µm and the proportion of the depth of the depressions to their width is preferably not less than 0.1. The microstructure of the outer layer A1 of the substrate A can also be a porous microstructure. The material of the thermoplastic of the surface layer B is applied on the so prepared outer layer A1 of the substrate A forming the intermediate layer C which is a mixture of the thermoplastics of the substrate A and of the surface layer B, as has been also shown in fig. 3, where the substrate is overmolded with the thermoplastic of the surface layer B in the injection molding process.

In a preferable embodiment of the component according to the invention, the substrate A and the surface layer B are made of the material of the same thermoplastic. Usually, however, the thermoplastics of the substrate A and of the surface layer B and therefore of the intermediate layer C have different required physical and chemical properties, depending on the intended use of the component, that is, depending on the target working conditions of the piece of equipment containing the components according to the invention.

In fig. 4 there is presented an example of the application of the component according to the invention in a constituent part of the insulating system of a low, medium or high voltage electric apparatus, according to the invention. The substrate A has the form of a section of a tube made in the injection molding process using an electrically conductive thermoplastic, for example, one containing filler in the form of carbon black. The outer layer A1 in the form of a microstructure has been made on the substrate A, and in the process of overmolding with the thermoplastic of the surface layer B, which is an electrically insulating thermoplastic, an intermediate layer C permanently bonding the two thermoplastics has been obtained. In the component that has been designed like this, the substrate A is used to shape the electric field, and the surface layer B is the electric insulation of the constituent part of the insulating system of a low, medium or high voltage electric apparatus. The application of the component, presented in fig. 4, serves as the electrical insulation of a conductor under voltage, not shown in the drawing, running through the central opening of the component.

In the present description of the invetion, by a thermoplastic there should be understood a commercially available thermoplastic material, that is, not a pure polymer material but a polymer material enriched with various additives, for example flow-improving additives, dyes etc., depending on the required physical and chemical properties and the intended use of the given thermoplastic.

Thermoplastics that can be used in the present invention include thermoplastics based on polymers such as polyesters, for example polyethylene terephthalate PET of the melting point above 190°C, polybutylene terephthalate PBT of the melting point above 190°C, polycarbonates PC of the melting point above 145°C, polyphenylene sulfide PPS of the melting point above 270°C, polyamides and copolyamides, also semi-aromatic ones, for example PA66 of the melting point above 160°C, PA6 of the melting point above 140°C, PA 6/66 of the melting point above 180°C, polyphthalamide PPA of the melting point above 280°C, for example PA 6T/66 of the melting point above 290°C, PA 6T/6I of the melting point above 300°C, and mixtures containing the above mentioned polymers as well as thermoplastics based on the above mentioned polymers containing reinforcing agents or other fillers in the form of grains or fibers of an electrically insulating material, for example glass fibers, or of an electrically conductive material, for example carbon black, carbon fibers, metallic or semiconductive fibers or grains. In all the further presented examples of embodiment of the component and of the execution of the method according to the invention, the material used for making the substrate A, the surface layer B and the intermediate layer C was the thermoplastic Zytel^{®} EFE 1068 NC010T based on polyamide 66 with the melting point of 263°C according to ISO 11357-1/-3 standard at a temperature change rate of 10°C/min and with Heat Deflection Temperatures (HDT) in solid state of 70°C and 200°C under the loads of 1.80MPa and 0.45MPa, respectively, according to ISO 75f standard. This thermoplastic shows also good electrically insulating properties, and in particular it is characterized by creep resistance (CTI) exceeding 600V according to the UL 746A standard for a 3 mm thick plate.

In fig. 2 and 3 there are schematically shown preferred embodiments of the method of manufacturing of the component made of the materials of two thermoplastics, according to the invention. In this method the substrate A made of the material of one thermoplastic is joined with the surface layer B made of the material of the second thermoplastic by means of the intermediate layer C formed from the material of the thermoplastic of the substrate A and from the material of the thermoplastic of the surface layer B. The intermediate layer C is formed as a mixture of both thermoplastics, i.e. the thermoplastic of the substrate A and the thermoplastic of the surface layer B, which is applied in liquid state onto the substrate A. In fig. 2 and 3, the arrow indicates the direction of application of the thermoplastic of the surface layer B.

The intermediate layer C can also be formed from the material of the thermoplastic of the outer surface A1 of the substrate A. The outer layer A1 has been formed earlier on the surface of the substrate A from the material of the thermoplastic of the substrate A in the form of a structure with developed surface containing free spaces, as shown in fig. 2 and 3. The free spaces can be of various profile, longitudinal section, cross-section, arrangement, orientation, location and sizes. In the preferred example of the execution of the method, the outer layer A1 of the substrate A is formed as a microstructure with the proportion of its surface area AP to the area of the projection of that surface larger than 1.25, preferably larger than 1.5. In this example of the execution of the method, the depth of the depressions does not exceed 50 µm and the proportion of the depth of the depressions to their width is not less than 0.1. The outer layer A1 of the substrate A is preferably formed as a porous microstructure.

The outer layer A1 can be formed in the substrate A using a mask with the negative of the structure with developed surface, which mask is brought to contact with the surface of the substrate A and pressed on the surface of the substrate A. One of the methods used to form the outer layer A1 in the substrate A by means of the mask with the negative of the structure with developed surface is the temperature indentation method, for instance a method using the mask load in the order of 100gf (1gf≈9.806 65mN) and a temperature from the range 140°C-190°C for a time between 5 and 100 h, as will be described in detail in Embodiment 1 below. Another method used to form the outer layer A1 in the substrate A by means of the mask with the negative of the structure with developed surface can be the solvent indentation method, preferably using the mask load in the order of 100gf (1gf≈9.806 65mN) for a time of 24 h.

The outer layer A1 can be formed in the substrate A by means of etching or by the polymer phase separation method also called the method of self-organization of polymer domains.

The outer layer A1 can also be formed on the surface of the substrate A directly in the process of manufacturing of the substrate A, preferably in the process of injection molding of the material of the thermoplastic of the substrate A. In this case, the method of production of the component according to the invention is a method consisting of two operations, namely formation of the substrate A from the material of one thermoplastic with the outer layer A1 on its surface, and application of the material of the second thermoplastic in the liquid state onto the outer layer A1, resulting in the formation of the surface layer B and of the intermediate layer C and thus also in the formation of the finished component.

The intermediate layer C is preferably formed by overmolding the substrate by the material of the thermoplastic of the surface layer B, in the process of formation of the surface layer B, followed by cooling the whole, as has been schematically shown in fig. 2 and 3. During the injection of the material of the thermoplastic of the surface layer B, the hot thermoplastic gets in contact with the material of the thermoplastic of the structure with developed surface of the outer layer A1, see fig. 2 and 3, and the material of the thermoplastic of the structure with developed surface of the outer layer A1 melts and the two thermoplastics are mixed together. In consequence, a separate intermediate layer C containing melted and mixed together thermoplastics of the substrate A and of the surface layer B is produced.

The substrate A can be heated before or during the formation of the intermediate layer C, preferably up to a temperature from the range of 100°C-300°C.

Melting of the outer layer A1 requires a smaller amount of heat compared to the amount of heat necessary to melt the layer with continuous structure of the same thermoplastic and of the same thickness, i.e. the layer of thermoplastic without free spaces. That is so because the amount of the thermoplastic material in the layer with the structure with developed surface, for example a porous surface, is smaller than the amount of the thermoplastic material in a continuous or solid structure of the same thickness. In addition, the layer with the structure having developed surface has a lower thermal conductivity compared to the layer with continuous structure that is made entirely of a thermoplastic material, i.e. without air voids. Owing to this, the heat supplied to the material of the outer layer A1 of the substrate A is not so easily carried away to the material of the substrate A, which delays the cooling of the outer layer A1.

In a specific case, if there is a need to produce such a component, the substrate A and the surface layer B are made of the material of the same thermoplastic. The embodiments of the component and of the execution of the method according to the invention which are presented below have been made with the substrate A, the surface layer B and the intermediate layer C made of a thermoplastic material based on polyamide 66 and commercially available under the name Zytel^{®} EFE 1068 NC010T.

The component made of the materials of two thermoplastics and the method of its production, according to the present invention, provide a product with constituent parts of the substrate A and the surface layer B permanently united with each other through the intermediate layer C formed without the need to use any additional bonding substances or any additional materials introduced into the structure of the finished component. Such additional substances or materials in known components made from thermoplastics and in known methods of their manufacturing are, for example, adhesives or primers. Introduction of an additional material of physical and chemical properties different from the properties of the thermoplastics of the constituent parts of the component, in particular of different electric properties, into the structure of the finished component, has a negative influence on the operation of the component in demanding conditions such as high electric fields.

Furthermore, the component production method, according to the invention, ensures a permanent connection between the substrate A and the surface layer B without the need to use joining methods such as ultrasonic welding, microwave welding, gluing, screwing together, riveting, grounding or other. Because of that, the method of production of the component according to the invention is cost effective and provides a component of very high mechanical resistance, especially tear resistance.

Owing to the above features of the component according to the invention it can be used as a constituent part or in a constituent part of the insulating system of a low, medium or high voltage electric apparatus, which is a very much desired advantage of the present invention.

### Embodiments

In all embodiments of the component according to the invention the substrates A were made of polyamide 66, trade name Zytel^{®} EFE 1068 NC010T, and they were made in the process of injection molding of the thermoplastic. The substrates A had the shape of a disk of a diameter 35 mm and thickness of 2mm. Before the injection of the material of the thermoplastic of the substrates A, the surface of the mold had been polished with abrasive compounds of the following gradations: 16, 9, 6, 3 and 1 µm. The same polyamide 66 as the one used for the substrate A was used as the thermoplastic for making the surface layer B.

### Embodiment 1

In the first embodiment of the component and of the execution of the method according to the invention, the outer layer A1 was formed on the surface of the substrate A as a structure with developed surface and in the form of a microstructure by means of the temperature indentation method.

This method consists in putting a mask, which is a three-dimensional negative of the desired structure, into contact with the substrate A. In this Embodiment 1, the mask had been made using a matrix made on a silicon wafer. Using photolithography, a microstructure matrix consisting of a group of parallel strips of a height of 1.5µm and a width of 5µm arranged in 5µm intervals was obtained on the surface of the silicon wafer. A layer of Polydimethylsiloxane, PDMS, solution was applied on the matrix prepared in this way, after which it was hardened at a temperature of 120°C for 25 minutes. After hardening the layer of the Polydimethylsiloxane solution and removing it from the matrix, a structure which was the negative of the structure that had been formed on the matrix remained on the layer. The PDMS mask that was prepared like this, which at the same time was the negative of the intended structure of the developed surface of the outer layer A1, was placed on the earlier prepared substrate A. To ensure a sufficient pressure exerted by the mask on the substrate A, the mask was additionally loaded with a weight of 100g (1 gf ≈ 9.80665 mN) i.e. it was pressed on with a force of approximately 1N. Next, the substrate A together with the mask were placed in an oven with an elevated temperature within the range from 140°C to 190°C for a time from 5 to 100 hours. After this time, on the surface of the thermoplastic substrate A, an outer layer A1 was formed in the form of microstructure, mirroring the mask pattern, which was verified by microscopic examination.

Next, the substrates A with the formed microstructures were placed inside an injection mold in such way that the injected thermoplastic material flowed onto the microstructure of the outer layer A1 forming an intermediate layer C and a surface layer B of a diameter of 35mm and thickness of 2mm. During injection of the hot material of the thermoplastic of the surface layer B, the hot material, while contacting the microstructure of the outer layer A1, see fig. 2, causes its melting and the materials of both thermoplastics of the substrate A and the surface layer B are mixed together. As a result, a separate intermediate layer C consisting of the materials of both thermoplastics of the substrate A and of the surface layer B is formed.

### Embodiment 2

In the second embodiment of the component and the execution of the method according to the invention, the outer layer A1 was formed on the surface of the substrate A as a structure with developed surface and in the form of a microstructure by means of the solvent indentation method.

In this method, the mask that had been obtained as described in the above embodiment A1 was used to produce the microstructure of the outer layer A1. Before putting the mask against the substrate A, the surface of the mask was covered with a solvent able to dissolve the thermoplastic of the substrate A. In the presented embodiment 2, a concentrated solution of formic acid was used. To be precise, a solution of formic acid of a concentration within the range of 98-100% was used. However, it is also possible to use formic acid of a different concentration, including a much lower concentration or generally of a concentration in the range of 10-100%, but then with an adequately longer time of action on the thermoplastic of the substrate A. Having been put against the substrate A, the mask was loaded with a weight of 100g (1 gf ≈ 9.80665 mN) that is it was pressed on with a force of approximately 1N for a time of 24 hours. After that the mask was removed and the desired microstructure of the outer layer A1 on the surface of the substrate A was obtained.

Then, two series of samples were taken from the substrates A prepared in this way. Each sample series was heated to obtain a different temperature of the substrate A and in this state the samples were put into the injection mold. The two samples of the substrate A were heated to the temperatures of 145°C and 170°C, respectively. The heated substrates A with the produced microstructures of the outer layers A1 were placed inside the injection mold in such way that the injected thermoplastic material flowed onto the microstructure forming the intermediate layer C and the surface layer B of a diameter of 35mm and thickness of 2mm.

The produced components were subjected to a strength test consisting in the application to the substrate A and to the surface layer B of forces perpendicular to their surfaces, that is perpendicular to their connection surface, and oriented in opposite directions. The obtained results shown in Table 1 indicate a considerable increase in the value of the force necessary to tear the component according to the invention compared to the value of the force necessary to tear the reference sample component. The reference sample component had been obtained using a known production method and it contained neither the outer layer A1 of the substrate A at the preliminary stage of production nor the intermediate layer C in the final product.

The reference samples were made as follows: the substrates A heated to a temperature of 145°C and 170°C respectively were placed inside the injection mold in such way that the injected thermoplastic flowed onto their surface forming the surface layer B of a diameter of 35mm and thickness of 2mm.

### Embodiment 3

In the third embodiment of the component and of the execution of the method according to the invention, the outer layer A1 was formed on the surface of the substrate A as a structure with developed surface and in the form of microstructure by means of etching.

The etching method is executed by means of a solvent able to dissolve the thermoplastic of the substrate A. The solvent can be applied on the surface of the substrate A by different methods, such as spraying, dip coating, painting, spin coating and the like. In the described Embodiment 3, concentrated formic acid solution was used, and it was applied on the substrate A using a spin coater. In the exemplary embodiment a solution of formic acid of a concentration within the range of 98-100% was used. However, it is also possible to use formic acid of a different concentration, including a much lower concentration or generally of a concentration in the range of 10-100%, but then with an adequately longer time of action on the thermoplastic of the substrate A.

The method of spin coating with solvent consisted in:
1. deposition of a drop of solvent on the surface of the substrate A
2. preliminary spinning at 50 RPM for the time of 10s
3. proper spinning at 4000 RPM for the time of 30s.

Then, two series of samples were taken from the substrates A prepared in this way. Each sample series was heated to obtain a different temperature of the substrate A and in this state the samples were put into the injection mold. The samples were heated to the temperature of the substrate A of 145°C and 170°C, respectively. The heated substrates A with the produced microstructures of the outer layers A1 were placed inside the injection mold in such way that the injected thermoplastic flowed onto the microstructure forming the intermediate layer C and the surface layer B of a diameter of 35mm and thickness of 2mm.

The produced components were subjected to a strength test consisting in the application to the substrate A and to the surface layer B of forces perpendicular to their surfaces, that is perpendicular to their connection surface and oriented in opposite directions. The obtained results shown in Table 1 indicate a considerable increase in the value of the force necessary to tear the component according to the invention compared to the value of the force necessary to tear the component of the reference sample. The component of the reference sample had been obtained using a known production method and it contained neither the outer layer A1 of the substrate A at the preliminary stage of production nor the intermediate layer C in the final product.

### Embodiment 4

In the fourth embodiment of the component and of the execution of the method according to the invention, the outer layer A1 was formed on the surface of the substrate A as a structure with developed surface and in the form of microstructure by means of the polymer phase separation method also called the method of self-organization of polymer domains.

In the Embodiment 4 of the component, the microstructure of the outer layer A1 of the substrate A was made by spreading a layer of a mixture M composed of two immiscible thermoplastics PI and PII and a solvent RI on the surface of the substrate A. Next, the phases of these thermoplastics were made to separate, which resulted in the formation of separate domains of each of the thermoplastics present in the mixture M. The process of phase separation can be conducted, for example, by means of thermal hardening or solvent hardening. In the present embodiment 4, solvent hardening was used. This consists in changing the concentration of solvent RI in a mixture M of two strongly immiscible thermoplastics PI and PII. The change in the concentration of solvent RI causes a change in the concentrations of the thermoplastics PI and PII in the mixture M, which causes that the mixture M becomes thermodynamically unstable. And this, in a certain range of proportions of the mixed thermoplastics PI and PII leads to separation of the phases of these thermoplastics PI and PII contained in the mixture M. As a result of this, separate domains containing only one thermoplastic PI or PII are formed in the layer of the mixture M. Further lowering of the concentration of solvent RI leads to solidification of the thermoplastics PI and PII and to the formation of a solidified layer consisting of separate domains of both thermoplastics PI and PII. The layer prepared like this is treated with solvent RII which dissolves only one of the thermoplastics PI or PII, which leads to this thermoplastic being washed away from the solidified layer of separate domains of the two thermoplastics PI and PII. Pores are formed in place of the domains of the washed out thermoplastic, PI or PII, respectively.

In the present Embodiment 4, a mixture M of thermoplastics PI and PII was used, where the thermoplastic PI, as the basic thermoplastic which remained as the outer layer A1 after washing out the thermoplastic PII, was polyamide 66 and the thermoplastic PII, which was washed out by means of solvent RI, was poly(methyl methacrylate), PMMA, with a weight-average molecular weight of 739000. The thermoplastics PI and PII, i.e. polyamide 66 and poly(methyl methacrylate), PMMA, were mixed in the proportion of 4:1. Formic acid was used as the solvent RI. The concentration of the obtained solution was 20mg/ml. It is also possible to use formic acid of a concentration in the range of 98-100%, or of a different concentration including a much lower concentration or generally of a concentration in the range of 10-100%, but then with an adequately longer time of action of solvent RI on the thermoplastics of the layer of the mixture M spread on the surface of the substrate A.

The solution of the solvent RI prepared in this way was spread on the surface of the substrate A using a spin coater. The time of spreading the solvent RI was 30s at a speed of 5000 RPM. Next, the substrate A with the applied solidified layer of separate domains of both thermoplastics PI and PII, that is polyamide 66 and poly(methyl methacrylate), PMMA, respectively, was subjected to washing in solvent RII, that is in xylene. Xylene dissolved and washed out the domains of the thermoplastic PII, that is poly(methyl methacrylate), PMMA. Washing was performed in an ultrasonic washer. In Embodiment 4, xylene of a concentration of 98% was used. Nevertheless, it is possible to use xylene of a different concentration in a time and with the parameters of the ultrasonic washer operation adequately selected for efficiently washing out the domains of the thermoplastic PII from the solidified layer of separate domains.

Then, two series of samples were taken from the substrates A prepared in this way. Each sample series was heated to obtain a different temperature of the substrate A and in this state the samples were put into the injection mold. The samples were heated to the temperature of the substrate A of 145°C and 170°C, respectively. The heated substrates A with the produced microstructures of the outer layers A1 were placed inside the injection mold in such way that the injected thermoplastic flowed onto the microstructure forming the intermediate layer C and the surface layer B of a diameter of 35mm and thickness of 2mm.

The produced components were subjected to a strength test consisting in the application to the substrate A and to the surface layer B of forces perpendicular to their surfaces, that is perpendicular to their connection surface and oriented in opposite directions. The obtained results shown in Table 1 indicate a considerable increase in the value of the force necessary to tear the component according to the invention compared to the value of the force necessary to tear the reference sample component. The reference sample component had been obtained using a known production method and it contained neither the outer layer A1 of the substrate A at the preliminary stage of production nor the intermediate layer C in the final product.

### Embodiment 5

In the fifth embodiment of the component and of the execution of the method according to the invention, the outer layer A1 was formed on the surface of the substrate A as a structure with developed surface and in the form of microstructure in the course of production of the substrate A, preferably in the single-stage or multi-stage injection molding process.

By a single-stage injection molding process is meant an operation during which both the substrate A and the outer layer A1 are made during one cycle of thermoplastic injection into the mold.

By a multi-stage injection process, in particular a two-stage process, is meant an operation during which the substrate A and the outer layer A1 are made in the course of separate cycles of thermoplastic injection into the mold.

For this purpose, the surface of the mold responsible for the formation of the structure with developed surface of the outer layer A1 on the surface of the substrate A is covered with a suitable structure which is the negative of the desired structure with developed surface of the outer layer A1.

The substrate A with the outer layer A1, obtained in this way, should be heated to a temperature from the range of 145°C to 170°C, after which it should be put into the injection mold and overmolded with the melted thermoplastic material of the surface layer B in order to form the intermediate layer C and the surface layer B and the whole should be cooled down thus forming the finished component.

**Table 1**

| Method of the preparation of the outer layer A1 on the substrate A | Temperature of substrate A [°C] after heating | Force necessary for tearing [N] the substrate A and the surface layer B |
|---|---|---|
| No outer layer A1, reference sample | 145 | 222 |
| The layer A1 obtained by etching, Embodiment 3 | 145 | 18104 |
| Outer layer A1 obtained by the phase separation method, Embodiment 4 | 145 | 13577 |
| No layer A1, reference sample | 170 | 200 |
| The layer A1 obtained by the solvent indentation method, Embodiment 2 | 170 | 7002 |
| The layer A1 obtained by the chemical etching method, Embodiment 3 | 170 | 12421 |
| The layer A1 obtained by the phase separation method, Embodiment 4 | 170 | 17349 |

### Table 1.

Contains the values of the force necessary to tear the component produced by the method according to the invention with different preferred methods of preparation of the outer layer A1 on the substrate A and for different temperatures of the substrate A before the application of the melted material of the surface layer B onto the outer layer A1 of the substrate A.

In all the described embodiments 1 through 5, the final component according to the invention was obtained by overmolding the outer layer A1, with the structure of a developed surface, that had been produced earlier by different methods on the surface of the substrate A of the material of one thermoplastic with the material of the other thermoplastic of the surface layer B. During overmolding, both thermoplastics mix and melt together, after which, during cooling, the specific intermediate layer C is formed. As a result of the application of the liquid thermoplastic of the surface layer B on the specially formed microstructure of the outer layer A1, a third layer which is a mixture of both melted thermoplastics is formed in the component.

This intermediate layer C bonds very well mechanically the substrate A and the surface layer B by a shape connection and at the same time it bonds cohesively the materials of the thermoplastics of the substrate A and of the surface layer B. The component according to the invention is characterized by unexpectedly high mechanical resistance, especially tear resistance, as shown in Table 1.

## Claims

1. A component made of the materials of two thermoplastics comprising a substrate (A) made of the material of one thermoplastic and a surface layer (B) made of the material of a second thermoplastic, **characterized in that** the substrate (A) is joined with the surface layer (B) through an intermediate layer (C) formed from the material of the thermoplastic of the substrate (A) and from the material of the thermoplastic of the surface layer (B), forming a component of enhanced mechanical resistance, the intermediate layer (C) containing a mixture of the material of the thermoplastic of the substrate (A) and the material of the thermoplastic of the surface layer (B).

2. The component according to claim 1, **characterized in that** the intermediate layer (C) is formed from the material of the thermoplastic of the outer layer (A1) of the substrate (A), the outer layer (A1) having a structure with developed surface.

3. The component according to claim 2, **characterized in that** the outer layer (A1) of the substrate (A) is a microstructure with the proportion of its surface area (AP) to the area of the projection of that surface larger than 1.25, the depth of the depressions not exceeding 50 µm, and the proportion of the depth of the depressions to their width being at least 0.1.

4. The component according to claim 2 or 3, **characterized in that** the outer layer (A1) of the substrate (A) is a porous microstructure.

5. The component according to any of the previous claims, **characterized in that** the substrate (A) and the surface layer (B) are made of the material of the same thermoplastic.

6. The component according to any of the previous claims, **characterized in that** the material of the thermoplastic of the substrate (A) and the material of the thermoplastic of the surface layer (B) are materials based on thermoplastic polymers of the polyester group, preferably polyethylene terephthalate (PET), polybutylene terephthalate (PBT), polycarbonates (PC), polyphenylene sulfide (PPS), polyamides and copolyamides, also semi-aromatic ones, preferably PA66, PA6, PA6/66, polyphthalamides PPA, preferably PA 6T/66 or PA 6T/6I, or based on mixtures containing the above mentioned polymers, or are materials based on the above mentioned polymers and containing reinforcing agents or fillers, preferably in the form of grains or fibers of an electrically insulating material, or an electrically conductive material, preferably in the form of carbon black, carbon or metallic fibers, metallic or semiconductive grains.

7. A constituent part of the insulating system of a low, medium or high voltage electric apparatus containing the component according to any of the previous claims.

8. A method of production of the component made of the materials of two thermoplastics, in which the substrate (A) of the material of one thermoplastic is bonded to the surface layer (B) of the material of another thermoplastic, **characterized in that** the substrate (A) is bonded to the surface layer (B) through an intermediate layer (C) which is formed from the material of the thermoplastic of the substrate (A) and from the material of the thermoplastic of the surface layer (B), forming a component with enhanced mechanical resistance, the intermediate layer (C) being formed as a mixture of the material of the thermoplastic of the substrate (A) and the material of the thermoplastic of the surface layer (B).

9. A method according to claim 8, **characterized in that** the intermediate layer (C) is formed from the material of the thermoplastic of the outer layer (A1) of the substrate (A), the outer layer (A1) having been formed earlier on the surface of the substrate (A) as a structure with developed surface.

10. A method according to claim 9, **characterized in that** the outer layer (A1) of the substrate (A) is formed as a microstructure with the proportion of its surface area (AP) to the area of the projection of that surface larger than 1.25, the depth of the depressions not exceeding 50 µm, and the proportion of the depth of the depressions to their width being at least 0.1.

11. A method according to claim 9 or 10, **characterized in that** the outer layer (A1) is formed in the substrate (A) using a mask which is the negative of the structure with developed surface, the mask being brought to contact with the surface of the substrate (A) and pressure being applied to it.

12. A method according to claim 11, **characterized in that** before the mask is brought to contact with the surface of the substrate (A), it is covered with a solvent able to dissolve the thermoplastic material of the substrate (A).

13. A method according to claim 9 or 10, **characterized in that** the outer layer (A1) is formed on the surface of the substrate (A) by etching.

14. A method according to claim 9 or 10, **characterized in that** the outer layer (A1) is formed on the surface of the substrate (A) by the polymer phase separation method also called the method of self-organization of polymer domains.

15. A method according to claim 9 or 10, **characterized in that** the outer layer (A1) is formed on the surface of the substrate (A) during the formation of the substrate (A), preferably in the injection molding process.

16. A method according to any of the claims 8 through 15, **characterized in that** the intermediate layer (C) is formed by overmolding the substrate (A) by the material of the thermoplastic of the surface layer (B), during the formation of the surface layer (B), which is cooled down, thus, together with the substrate (A), forming the component.

17. A method according to any of the claims 8 through 16, **characterized in that** before or during the formation of the intermediate layer (C) the substrate (A) is heated, preferably to a temperature from the range of 100°C-300°C, and more preferably to a temperature from the range of 145°C-170°C.
